(19) **Europäisches Patentamt**
European Patent Office
Office européen des brevets

(11) **EP 4 289 060 B1**

(12) **EUROPÄISCHE PATENTSCHRIFT**

(45) Veröffentlichungstag und Bekanntmachung des Hinweises auf die Patenterteilung:
**27.11.2024 Patentblatt 2024/48**

(21) Anmeldenummer: **22718194.8**

(22) Anmeldetag: **25.03.2022**

(51) Internationale Patentklassifikation (IPC):
**H02P 6/185** (2016.01)

(52) Gemeinsame Patentklassifikation (CPC):
**H02P 6/185**

(86) Internationale Anmeldenummer:
**PCT/EP2022/057964**

(87) Internationale Veröffentlichungsnummer:
**WO 2022/207499 (06.10.2022 Gazette 2022/40)**

(54) **VERFAHREN UND VORRICHTUNG ZUR BEREITSTELLUNG EINES KOMMUTIERUNGSINTERVALLS**

METHOD AND DEVICE FOR PROVIDING A COMMUTATION INTERVAL

PROCÉDÉ ET DISPOSITIF POUR FOURNIR UN INTERVALLE DE COMMUTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2021 DE 102021203236**
**30.03.2021 DE 102021203222**
**15.04.2021 DE 102021203758**

(43) Veröffentlichungstag der Anmeldung:
**13.12.2023 Patentblatt 2023/50**

(60) Teilanmeldung:
**23207510.1 / 4 293 894**
**23217368.2 / 4 318 930**

(73) Patentinhaber: **Elmos Semiconductor SE**
**44227 Dortmund (DE)**

(72) Erfinder:
• **BERNHARDT, Jan**
**01127 Dresden (DE)**
• **KRUPAR, Jörg**
**01833 Stolpen (DE)**

(74) Vertreter: **Tautz & Schuhmacher**
**Nibelungenstraße 84**
**80639 München (DE)**

(56) Entgegenhaltungen:
EP-A2- 2 387 143      WO-A2-2009/047217
DE-A1- 10 220 077      DE-A1- 10 221 385
DE-A1- 102016 123 707      DE-A1- 102016 123 715
DE-A1- 102019 127 051

• NARAYANAN GEETHA ET AL: "Realistic Experience without Risk Using Virtual Electrical Machines Laboratory", 2016 INTERNATIONAL CONFERENCE ON LEARNING AND TEACHING IN COMPUTING AND ENGINEERING (LATICE), IEEE, 31 March 2016 (2016-03-31), pages 132 - 133, XP033005283, DOI: 10.1109/LATICE.2016.23
• DANIEL CALIN MARIUS ET AL: "Temperature influence and measurement uncertainty on NdFeB magnetic characteristics", 2017 5TH INTERNATIONAL SYMPOSIUM ON ELECTRICAL AND ELECTRONICS ENGINEERING (ISEEE), IEEE, 20 October 2017 (2017-10-20), pages 1 - 6, XP033265197, DOI: 10.1109/ISEEE.2017.8170699
• IMERYUZ M ET AL: "A method to analyze asynchronous machines with broken rotor bars", POWER ELECTRONICS ELECTRICAL DRIVES AUTOMATION AND MOTION (SPEEDAM), 2010 INTERNATIONAL SYMPOSIUM ON, IEEE, PISCATAWAY, NJ, USA, 14 June 2010 (2010-06-14), pages 269 - 272, XP031730244, ISBN: 978-1-4244-4986-6

**Beschreibung**

Die vorliegende Erfindung betrifft ein Verfahren und eine Vorrichtung zur Bestimmung von Magnetisierungsparametern eines Dreiphasen-Elektromotors. Die Erfindung liegt somit insbesondere auf dem Gebiet der Elektromotoren und der Ansteuerung von Elektromotoren.

Für den zuverlässigen Betrieb eines Dreiphasen-Elektromotors ist oftmals die Detektion der Rotorposition, insbesondere im Stillstand oder bei niedrigen Drehzahlen des Motors, vorteilhaft. Insbesondere ist eine Kenntnis der Rotorposition für eine akkurate und zuverlässige Kommutierung vorteilhaft. Dazu sind im Stand der Technik diverse verschiedene Verfahren bekannt, welche in sensorbasierte und sensorlose Verfahren unterteilbar sind. Sensorbasierte Verfahren haben den Nachteil, dass sie geeignete Sensoren benötigen und entsprechend der Hardwareaufwand und die damit verbundenen Kosten höher sind, als bei sensorlosen Verfahren. Sensorlose Verfahren beruhen typischerweise auf der Einspeisung von Testpulsen bzw. Messpulsen in den Elektromotor, was zu einer unerwünschten Geräuschentwicklung führen kann. Die sensorlosen Verfahren beruhen oftmals auf der Positions- und Stromabhängigkeit von Statorinduktivitäten des Elektromotors. Die verschiedenen sensorlosen Verfahrensarten sind beispielsweise in der Offenlegungsschrift DE 10 2019 127 051 A1 beschrieben.

Die applikativen Grenzen von sensorlosen Verfahren zur Detektion der Rotorposition sind nach wie vor Gegenstand von Forschung und Entwicklung und können häufig nur mit hohem Aufwand experimentell bestimmt werden. Dabei kann es auch zu Fehlinterpretationen kommen, die unter Umständen erst in einem späten Stadium der Produktentwicklung als solche auffallen und sodann zu entsprechenden Problemen führen und/oder einen hohen Aufwand und hohe Kosten für deren Beseitigung erfordern.

Eine simulative Vorhersage der Eigenschaften des Elektromotors bzw. der Applikation ist prinzipiell komfortabel, allerdings herkömmlicherweise nicht ohne weiteres möglich, da dies eine genaue Kenntnis der Magnetisierungsparameter des Elektromotors erfordert. Die Magnetisierungsparameter umfassen dabei den Parameter $k_1$, der eine Induktivitätsvariation durch die Rotormagnete charakterisiert, und den Parameter $k_2$, der eine Induktivitätsvariation bedingt durch die Bestromung des Elektromotors charakterisiert.

Herkömmlicherweise ist die Bestimmung der Magnetisierungsparameter, speziell von $k_2$ nur empirisch möglich. Einfache Aufbauten zur direkten Bestimmung aus Messungen versagen bisher insbesondere durch die Einflüsse parasitärer Widerstände im Gesamtaufbau. Der Parameter $k_1$ ist prinzipiell auf direktem Weg über Messung von der Induktivitäten $L_D$ und $L_Q$ an einer einzelnen Wicklung des Motors bestimmbar, jedoch kann meist nicht direkt eine einzelne Wicklung des Motors vermessen werden. Ursache dafür ist, dass typischerweise nur die äußeren drei Klemmen des Dreiphasen-Elektromotors zugänglich sind. Intern ist der Motor dann entweder in Sternschaltung oder in Dreieckschaltung verschaltet. Dadurch überlagern sich die Effekte an wenigstens zwei der drei Wicklungen und die direkte Berechnung ist nicht mehr möglich.

Sensorlose Verfahren zur Bestimmung der initialen Rotorlage beruhen typischerweise auf einer Messung der Spannung am induktiven Spannungsteiler, d.h. am Anschluss der unbestromten Phase. Diese weisen jedoch den Nachteil auf, dass in manchen Fällen keine zuverlässige Nord-/Süd-Detektion möglich ist. Dies kann insbesondere bei hochstromfähigen Motoren der Fall sein.

NARAYANAN GEETHA ET AL, "Realistic Experience without Risk Using Virtual Electrical Machines Laboratory", 2016 INTERNATIONAL CONFERENCE ON LEARNING AND TEACHING IN COMPUTING AND ENGINEERING (LATICE), IEEE,31. März 2016 (2016-03-31), Seite 132-133, beschreibt ein virtuelles Maschinenlabor, in dem Experimente an virtuellen Maschinen durchgeführt werden können.

Es ist eine Aufgabe der vorliegenden Erfindung, ein Verfahren und eine Vorrichtung bereitzustellen, mittels welchen die Magnetisierungsparameter $k_1$ und $k_2$ zuverlässig und optional automatisiert bestimmbar sind.

In einem Aspekt betrifft die Erfindung daher ein Verfahren zur Bestimmung von Magnetisierungsparametern eines Dreiphasen-Elektromotors mit einem Rotor und einem Stator. Das Verfahren umfasst ein Einspeisen von Strompulsen in eine erste und zweite Phase des Dreiphasen-Elektromotors, wobei das Einspeisen der Strompulse über einen Messzeitraum erfolgt, sowie ein Drehen des Rotors um zumindest einen Teil einer elektrischen Umdrehung relativ zum Stator während des Messzeitraums, wobei das Drehen gleichmäßig über den gesamten Messzeitraum erfolgt. Ferner umfasst das Verfahren ein Messen einer Spannung an einem induktiven Spannungsteiler des Dreiphasen-Elektromotors während des Messzeitraums und ein Ermitteln von Messwerten der gemessenen Spannung bei vorbestimmten Drehwinkeln des Rotors relativ zum Stator. Außerdem umfasst das Verfahren ein Berechnen von entsprechenden Simulationswerten der Spannung am Spannungsteiler bei den vorbestimmten Drehwinkeln unter Verwendung vorbestimmter Schätzwerte für die Magnetisierungsparameter und Anpassen der vorbestimmten Schätzwerte für die Magnetisierungsparameter derart, dass eine Abweichung der Simulationswerte der Spannung von den Messwerten der gemessenen Spannung minimiert wird. Zudem umfasst das Verfahren ein Bestimmen zumindest eines oder mehrerer der Magnetisierungsparameter des Dreiphasen-Motors anhand der für die Minimierung der Abweichung der Simulationswerte von den Messwerten der gemessenen Spannung angepassten Schätzwerte der Magnetisierungsparameter.

In einem weiteren Aspekt betrifft die Erfindung eine Vorrichtung zur Bestimmung von Magnetisierungsparametern eines Dreiphasen-Elektromotors mit einem Rotor und einem Stator. Die Vorrichtung umfasst eine Ansteuereinheit zur Bestromung des Dreiphasen-Elektromotors und zur Einspeisung von Strompulsen in eine erste und zweite Phase des Dreiphasen-Elektromotors über einen Messzeitraum. Die Vorrichtung umfasst ferner eine Dreheinheit zum Drehen des Rotors relativ zum Stator, wobei die Vorrichtung dazu eingerichtet ist, den Rotor relativ zum Stator mittels der Dreheinheit während des gesamten Messzeitraums gleichmäßig um eine elektrische Umdrehung zu drehen, sowie ein Messelement zum Messen einer Spannung an einem induktiven Spannungsteiler des Dreiphasen-Elektromotors während des Messzeitraums. Außerdem umfasst die Vorrichtung eine Steuereinheit, welche dazu eingerichtet ist, Messwerte der mittels des Messelements gemessenen Spannung bei vorbestimmten Drehwinkeln des Rotors relativ zum Stator zu ermitteln, sowie Simulationswerte der Spannung am Spannungsteiler bei den vorbestimmten Drehwinkeln unter Verwendung vorbestimmter Schätzwerte für die Magnetisierungsparameter zu berechnen und die vorbestimmten Schätzwerte für die Magnetisierungsparameter derart anzupassen, dass eine Abweichung der Simulationswerte der Spannung von den Messwerten der gemessenen Spannung minimiert wird. Zudem ist die Steuereinheit dazu eingerichtet, einen oder mehrere der Magnetisierungsparameter des Dreiphasen-Motors anhand der für die Minimierung der Abweichung der Simulationswerte von den Messwerten der gemessenen Spannung angepassten Schätzwerte der Magnetisierungsparameter zu bestimmen.

Ein Dreiphasen-Elektromotor ist dabei ein Elektromotor mit einem Stator und einem Rotor, welcher drei Phasen bzw. drei Wicklungen aufweist, die jeweils über einen eigenen Anschluss bestrombar sind. Die Wicklungen können dabei im Elektromotor derart angeordnet sein, dass diese zumindest teilweise einander überlappen. Beispielsweise können die Phasen des Elektromotors in einer Dreiecksschaltung oder in einer Sternschaltung miteinander verschaltet sein. Die Begriffe Dreiphasen-Elektromotor, Elektromotor und Motor werden in diesem Offenbarungstext als Synonyme verwendet.

Das Einspeisen von Strompulsen kann insbesondere durch das Anlegen von Spannungspulsen an die jeweiligen Anschlüsse der Phasen erfolgen. Dabei kann die Richtung des Stromflusses durch die Polarität der angelegten Spannung beeinflusst werden. Insbesondere aufgrund der Induktivitäten der Wicklungen bzw. Phasen muss die Richtung des Stromflusses allerdings nicht immer instantan der Polarität der Spannungspulse folgen. So kann etwa ein rasches Umpolen der angelegten Spannungsulse dazu führen, dass ein bereits zuvor vorhandener Stromfluß zwar reduziert wird, sich aber die Richtung des Stromflusses nicht umkehrt.

Der induktive Spannungsteiler kann insbesondere der Spannung zwischen dem Anschluss der unbestromten Phase und der Masse entsprechen. Die Spannung ist dabei durch das Verhältnis der Induktivitäten $L_1$ und $L_2$ der ersten bzw. zweiten bestromten Phase bestimmt, welche wiederum von der Position des Rotors abhängt.

Dass die Messung der Spannung bei vorbestimmten Drehwinkeln erfolgt, bedeutet, dass die Messwerte der gemessenen Spannung zumindest bei festgelegten Drehwinkeln des Rotors erfolgt. Dabei können die vorbestimmten Drehwinkel relative Winkel bezüglich der anfänglichen Drehwinkelposition des Rotors darstellen. Beispielsweise können durch die vorbestimmten Drehwinkel bestimmte Messintervalle aufgespannt werden. Alternativ oder zusätzlich können die vorbestimmten Drehwinkel abhängig von dem Messfortschritt sein und solchen Winkeln entsprechen, bei denen die gemessene Spannung ein Minimum oder ein Maximum oder einen anderen identifizierbaren Wert aufweist.

Das Berechnen von Simulationswerten der Spannung derart, dass eine Abweichung der Simulationswerte der Spannung von den Messwerten der gemessenen Spannung minimiert wird, bedeutet dabei, dass eine Optimierung der Simulationswerte erfolgt, sodass die Simulationswerte der Spannung möglichst genau den gemessenen Spannungswerten entsprechen. Mit anderen Worten erfolgt eine Optimierung der Simulationswerte durch eine Variation der Parameter $k_1$ und $k_2$.

Die Erfindung bietet den Vorteil, dass damit die Magnetisierungsparameter $k_1$ und $k_2$ zuverlässig ermittelt werden können. So können beispielsweise die Magnetisierungsparameter für jeden Motortyp und/oder für jeden einzelnen Motor ab Werk bestimmt werden und die auf diese Weise ermittelten Parameter für eine zuverlässige Bestimmung der Rotorposition während des Betriebs des Motors verwendet werden. Somit bietet die Erfindung den Vorteil, dass durch erfindungsgemäß bestimmten Magnetisierungsparameter Verfahren für die sensorlose Bestimmung der Rotorposition ermöglicht werden, welche ohne durch eine zuverlässige Bestimmung bereitgestellte Magnetsierungsparameter nicht anwendbar wären. Dadurch bietet die Erfindung den Vorteil, dass auch für Motoren, die eine zuverlässige Kenntniss des Rotorwinkels erfordern, nicht auf mit zusätzlichen Kosten behaftete sensorbasierte Bestimmungen des Rotorwinkels zurückgegriffen werden muss.

Ferner bietet die Erfindung den Vorteil, dass die Bestimmung der Magnetisierungsparameter teilweise oder vollständig automatisiert erfolgen kann. Dies ermöglicht eine routinemäßige Bestimmung von Magnetisierungsparametern zahlreicher Elektromotoren. Beispielsweise können auf diese Weise die Magnetisierungsparameter einer Vielzahl von Motoren bestimmt werden und die durch Mittelwertbildung berechneten Magnetisierungsparameter für eine jeweilige Baureihe von Elektromotoren herangezogen werden.

Optional umfasst das Messen einer Spannung am induktiven Spannungsteiler ein Messen einer Spannungsdifferenz zwischen einem ersten und einem zweiten Spannungswert. Der erste Spannungswert wird durch das Einspeisen eines Strompulses mittels eines Spannungspulses einer ersten Polarität erzeugt und der zweite Spannungswert durch das Einspeisen eines Strompulses mittels eines Spannungspulses einer der ersten Polarität entgegengesetzten zweiten Polarität. Dies bietet den Vorteil, dass die Zuverlässigkeit der Bestimmung erhöht werden kann, da durch die Verwendung der Spannungsdifferenz Störeinflüsse reduziert werden können. Insbesondere können solche Störeinflüsse, die den ersten und zweiten Spannugnswert bzw. die daraus hervorgehenden Strompulse gleichermaßen betreffen, herausgemittelt werden, sodass diese keinen Einfluss auf die für die Bestimmung der Magnetisierungsparameter verwendete Spannungsdifferenz haben. Insbesondere kann das Verwenden der Spannungsdifferenz eine durch die Drehung des Rotors relativ zum Stator verursachte Motorspannung reduzieren, welche andernfalls die gemessene Spannung überlagert.

Optional sind die Strompulse als Testpulse ausgebildet, wobei das Verfahren zumindest einmal bei abgesehen von den Testpulsen unbestromtem Dreiphasen-Elektromotor durchgeführt wird. Dabei umfasst das Bestimmen des einen oder der mehreren Magnetisierungsparameter ein Bestimmen eines Magnetisierungsparameters $k_1$, der eine Induktivitätsvariation durch einen oder mehrere Rotormagnete des Dreiphasen-Elektromotors charakterisiert. Durch die Durchführung des Verfahrens bei unbestromtem Motor lassen sich insbesondere die Effekte des Rotormagneten auf die Induktivitäten des Elektromotors ermitteln, welche durch den Parameter $k_1$ charakterisiert sind.

Optional wird das Verfahren zumindest einmal bei zusätzlich zu den Testpulsen bestromtem Dreiphasen-Elektromotor durchgeführt, wobei das Bestimmen des einen oder der mehreren Magnetisierungsparameter ein Bestimmen eines Magnetisierungsparameters $k_2$ umfasst, der eine Induktivitätsvariation durch eine Bestromung des Dreiphasen-Elektromotors charakterisiert. Dies bietet den Vorteil, dass auch die durch die Bestromung des Motors herrührende Beeinflussung der Induktivitäten zuverlässig und auf einfache Weise bestimmt werden können. Optional erfolgt dabei das Bestromen des Dreiphasen-Elektromotors derart, dass eine Kommutierung der Bestromung über den Messzeitraum unverändert beibehalten wird. Mit anderen Worten wird der Drehwinkel des Rotos geändert, während die Kommutierung des bestromten Motors unverändert beibehalten wird.

Auf diese Weise können die Effekte des Rotordrehwinkels auf die durch die Bestromung herrührenden Induktivitätsänderungen zuverlässig ermittelt werden.

Optional wird das Verfahren zumindest einmal bei bestromtem Dreiphasen-Elektromotor durchgeführt, wobei die Strompulse als Blockkommutierungspulse ausgebildet sind. Dies bietet den Vorteil, dass für das bei bestromtem Motor durchgeführte Verfahren keine zusätzlichen Messpulse bereitgestellt werden müssen, sondern die regulären Kommutierungspulse verwendet werden können. Dadurch können der Aufwand und/oder die Komplexität der Messung reduziert werden.

Optional wird das Verfahren zumindest einmal bei unbestromtem und zumindest einmal bei bestromtem Dreiphasen-Elektromotor durchgeführt. Dies bietet den Vorteil, dass beide Magnetisierungsparameter $k_1$ und $k_2$ zuverlässig bestimmt werden können.

Optional wird das Verfahren abwechselnd bei unbestromtem und bestromtem Dreiphasen-Elektromotor iterativ durchgeführt, wobei zumindest ein Teil der bei einer Durchführung des Verfahrens bestimmten Magnetisierungsparameter bei der darauffolgenden iterativen Durchführung des Verfahrens als vorbestimmte Schätzwerte für die Magnetisierungsparameter verwendet wird. Dies bietet den Vorteil, dass auch die gegenseitige Abhängigkeit der Magnetisierungsparameter $k_1$ und $k_2$ mit berücksichtigt werden kann und auf diese Weise eine schrittweise voranschreitende Verbesserung der Genauigkeit der Bestimmung beider Magnetisierungsparameter erreicht werden kann. So kann etwa eine bei der iterativen Durchführung des Verfahrens voranschreitende Präzisierung des Magnetisierungsparameters $k_1$ bei der weiteren Präzisierung des Magnetisierungsparameters $k_2$ berücksichtigt werden und umgekehrt. Auf diese Weise ist eine zuverlässige Bestimmung beider Magnetisierungsparameter erreichbar.

Optional sind derartige Drehwinkel als vorbestimmte Drehwinkel vorbestimmt, bei denen die jeweils gemessene Spannung ein lokales Maximum und/oder ein lokales Minimum aufweist. Dies bietet den Vorteil, dass anhand der Messwerte der gemessenen Spannugen bei den Maxima und/oder Minima die Magnetisierungsparameter besonders zuverlässig bestimmt werden können. Außerdem bietet dies den Vorteil, dass die Magnetisierungsparameter anhand dieser vorbestimmten Drehwinkel mit einer geringen Anzahl von Messwerten bzw. Drehwinkeln bestimmt werden können. Optional weist dabei der zumindest eine Teil der elektrischen Umdrehung, um den der Rotor relativ zum Stator gedreht wird, zumindest 90° und zumindest einen vorbestimmten Drehwinkel auf, bei dem die gemessene Spannung ein lokales Minimum aufweist und zumindest einen weiteren vorbestimmten Drehwinkel, bei dem die gemessene Spannung ein lokales Maximum aufweist. Dies bietet die Möglichkeit, den Drehwinkel zu reduzieren und auf diese Weise den Aufwand und die Dauer für die Messung zu verkürzen.

Optional sind die vorbestimmten Drehwinkel derart vorbestimmt, dass anhand der gemessenen Spannung bei den vorbestimmten Drehwinkeln ein kontinuierlicher Verlauf der Spannung über die elektrische Umdrehung bestimmbar ist. Dies ermöglicht eine einfache Identifizierung solcher Drehwinkel, bei denen die gemessene Spannung ein lokales Minimum oder ein lokales Maximum aufweist. Auch mag dies dahingehend vorteilhaft sein, dass eine Anpassung der Simulationswerte an die gemessenen Werte erleichtert wird.

Optional fließen die vorbestimmten Schätzwerte für die Magnetisierungsparameter über ein vorbestimmtes mathematisches Modell für die jeweilige Induktivität der ersten und zweiten Phase des Dreiphasen-Elektromotors in die Berechnung der Simulationswerte ein. Insbesondere kann das vorbestimmte mathematische Modell die Möglichkeit einer Automatisierung des Berechnens der Simulationswerte bieten, indem beispielsweise das vorbestimmte mathematische Modell auf einer Rechneneinheit hinterlegt ist.

Optional umfasst das Verfahren ferner ein Vorpositionieren des Rotors relativ zum Stator vor dem Einspeisen der Strompulse auf einen vorbestimmten Start-Drehwinkel. Dies kann insbesondere dahingehend vorteilhaft sein, dass ein Drehwinkelbereich, über welchen der Rotor während der Messung gedreht wird, einen gewünschten Bereich umfasst und/oder in einem gewünschten Bereich startet. So kann beispielsweise der Drehwinkelbereich dahingehend optimiert werden, dass die Wahrscheinlichkeit eines Auftretens eines lokalen Maximums und/oder Minimums im vorbestimmten Drehwinkelbereich maximiert wird. Ferner kann dies den Vorteil bieten, dass eine Vergleichbarkeit mehrerer verschiedener Messungen erreicht und/oder erhöht wird. Optional erfolgt das Vorpositionieren mittels einer mechanischen Zwangspositionierung und/oder durch ein Einprägen von Strom in den Dreiphasen-Elektromotor bis zur Erreichung des Start-Drehwinkels. Dies bietet die Möglichkeit, die Vorpositionierung zu automatisieren.

Die oben genannten und im Folgenden erläuterten Merkmale und Ausführungsformen sind dabei nicht nur als in den jeweils explizit genannten Kombinationen offenbart anzusehen, sondern sind auch in anderen technisch sinnhaften Kombinationen und Ausführungsformen vom Offenbarungsgehalt umfasst. Insbesondere können die einzelnen Aspekte der vorliegenden Offenbarung miteinander kombiniert werden. So kann optional ein Verfahren zur Bereitstellung eines Kommutierungsintervalls die Verwendung von Magnetisierungsparametern beinhalten, welche gemäß einem Verfahren nach einem weiteren Aspekt der vorliegenden Offenbarung bestimmt wurden. Alternativ oder zusätzlich kann ein Verfahren zur Bestimmung einer initialen Rotorlage eines Dreiphasen-Elektromotors gemäß einem Aspekt der vorliegenden Offenbarung die Verwendung von Magnetisierungsparametern beinhalten, welche gemäß einem Verfahren nach einem weiteren Aspekt der vorliegenden Offenbarung bestimmt wurden. Auch kann in eine Ansteuerung eines Dreiphasen-Elektromotors ein Verfahren zur Bereitstellung eines Kommutierungsintervalls gemäß einem Aspekt der vorliegenden Offenbarung und ein Verfahren zur Bestimmung der initialen Rotorlage des Dreiphasen-Elektromotors gemäß einem Aspekt der vorliegenden Offenbarung implementiert sein, welche optional Magnetisierungsparameter des Dreiphasen-Elektromotors verwenden, die gemäß einem Verfahren nach einem weiteren Aspekt der vorliegenden Offenbarung bestimmt wurden. Mit anderen Worten können die einzelnen Aspekte der Erfindung miteinander kombiniert werden oder unabhängig voneinander verwendet werden.

Weitere Einzelheiten und Vorteile der Erfindung sollen nun anhand der folgenden Beispiele und bevorzugten Ausführungsformen mit Bezug auf die Figuren näher erläutert werden.

Kurzbeschreibung der Figuren:

Fig. 1A und 1B zeigt in schematische Darstellungen eines Dreiphasen-Elektromotors in Sternschaltung (Figur 1A) und in Dreiecksschaltung (Figur 1B);

Figur 2 zeigt einen beispielhaften zeitlichen Verlauf der Spannungen $U_1$, $U_2$ und $U_3$ sowie des Stromverlaufs durch die zweite Phase 2212.2;

Figuren 3 bis 6 zeigt Graphen der gemessenen und simulierten Spannung $U_3$ gegenüber dem Drehwinkel des Rotors gegenüber dem Stator.

In den folgenden Figuren werden gleiche oder ähnliche Elemente in den verschiedenen Ausführungsformen der Einfachheit halber mit gleichen Bezugszeichen bezeichnet.

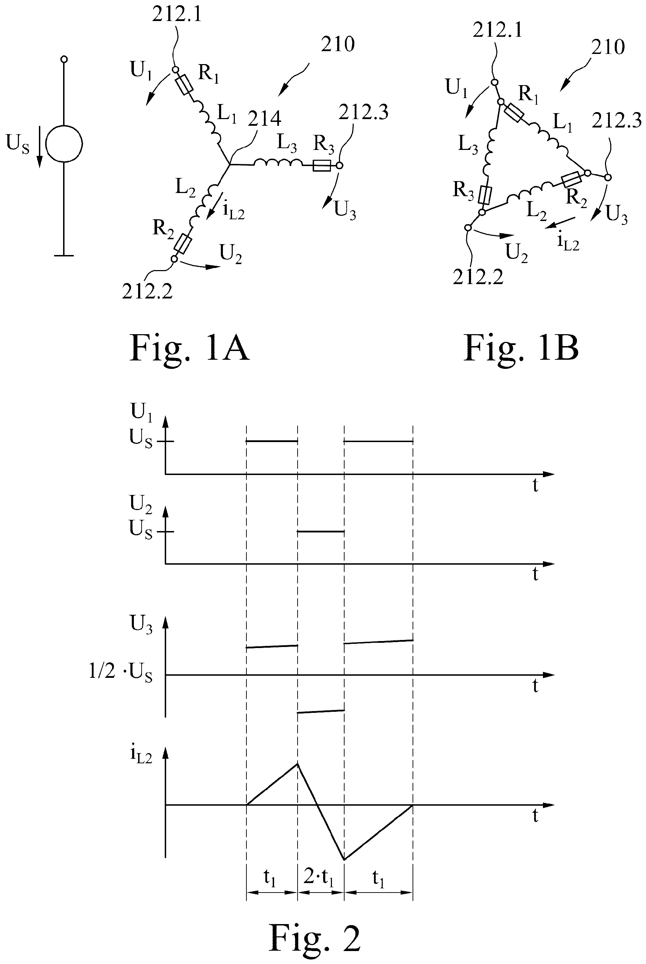

Die Figuren 1A und 1B zeigen beispielhaft in schematischen Darstellungen einen Dreiphasen-Elektromotor 210 in Sternschaltung (Figur 1A) und in Dreiecksschaltung (Figur 1B). Der Elektromotor 210 weist dabei drei Anschlüsse 212.1, 212.2 und 212.3 für die drei verschiedenen Phasen 212 auf. Jede der drei Phasen 212.1, 212.2 und 212.3 ist dabei beispielhaft durch eine zugehörige Induktivität $L_1$, $L_2$ bzw. $L_3$ und einen zugehörigen ohmschen Widerstand $R_1$, $R_2$ bzw. $R_3$ charakterisiert. Die Versorgungsspannung des Elektromotors 210 ist als $U_S$ gekennzeichnet und entspricht einer Potenzialdifferenz gegenüber einem Massepotenzial. An den drei Anschlüssen 212.1, 212.2 und 212.3 der drei Phasen können voneinander unterschiedliche Spannungen $U_1$, $U_2$ bzw. $U_3$ anliegen, welche ebenfalls eine Potenzialdifferenz gegenüber dem Massepotenzial darstellen.

Jede der drei Phasen ist an einem Ende mit einem zugehörigen Anschluss 212.1, 212.2 und 212.3 verbunden. Im Falle der Sternschaltung (Figur 1A) ist das andere Ende mit einem Sternpunkt 214 der Sternschaltung verbunden. Im Falle der Dreiecksschaltung (Figur 1B) ist das jeweils andere Ende mit dem Anschluss 212.1, 212.2 bzw. 212.3 der nächsten Phase verbunden.

Im Folgenden wird mit Bezug auf die Figuren ein Verfahren zur Bestimmung von Magnetisierungsparametern des Elektromotors 210 gemäß einer optionalen Ausführungsform erläutert, ohne dass das Verfahren jedoch auf diese optionale Ausführungsform beschränkt ist. Zur Veranschaulichung der Erläuterung sollen die Phasen 212.1 und 212.2 des Elektromotors 210 die erste und zweite Phase des Elektromotors 210 darstellen, in welche verfahrensgemäß Strompulse eingespeist werden, während die dritte, unbestromte Phase durch die Phase 212.3 gebildet ist. Jedoch könnte die Zuordnung bzw. Reihenfolge auch nach Belieben anders gewählt werden.

In Figur 2 ist ein beispielhafter zeitlicher Verlauf der Spannungen $U_1$, $U_2$ und $U_3$ sowie des Stromverlaufs $i_{L2}$ durch die zweite Phase 212.2 gegenüber der Zeit t dargestellt. Wie in den oberen beiden Graphen, welche $U_1$ und $U_2$ darstellen, erkennbar ist, werden die erste und die zweite Phase zeitlich abwechselnd mit einem Spannungspuls versehen, sodass entsprechend in der zweiten Phase 212.2 alternierend steigende und fallende Strompulse eingespeist werden ($i_{L2}$, unterster Graph in Figur 2). Ferner ist in Figur 2 auch der zeitliche Verlauf der Spannung in der dritten Phase bzw. am Anschluss der dritten Phase 212.3 im dritten Graphen dargestellt, welche alternierende Werte annimmt, die oberhalb oder unterhalb der Hälfte der Versorgungsspannung $U_S$ liegen, in Abhängigkeit davon, ob die Spannung an die erste oder die zweite Phase 212.1 bzw. 212.2 angelegt wird. Außerdem ist in den jeweiligen Alternierungsintervallen der Spannung $U_3$ jeweils ein Spannungsanstieg zu erkennen, dessen Amplitude im Vergleich zur Gesamtspannung $U_3$ klein ausgebildet ist, welcher durch den sich während der Zeitdauer ändernden Stromflusses verursacht wird.

Der Stromfluss $i_{L2}$ durch die zweite Phase 212.2 folgt einem sägezahnartigen Verlauf, dessen Steigung bei jedem Wechsel der Strompulse sein Vorzeichen ändert. Die Zeitintervalle, für welche jeweils ein Spannungspuls angelegt wird und entsprechend die Steigung der Stromstärke $i_{L2}$ erhalten bleibt, werden in den Graphen in Figur 2 als $t_1$ bezeichnet.

Bei der Messung der Spannung $U_3$ an der dritten, unbestromten Phase kann auch eine Spannungsdifferenz der Spannung zu verschiedenen Zeitpunkten ausgewertet werden, bei welcher die Differenz der Spannung $U_3$ zu einem Zeitpunkt, an dem der Spannungspuls in der ersten Phase eingespeist wird, und der Spannung $U_3$ zu einem zweiten Zeitpunkt, an dem der Spannungspuls in der zweiten Phase 212.2 eingespeist wird, gebildet wird. Somit kann die Spannung $U_3$ oder auch die genannte Spannungsdifferenz für die Durchführung des Verfahrens verwendet werden. Im Rahmen dieser Offenbarung ist von Erläuterungen hinsichtlich der Spannung $U_3$ auch die entsprechende Erläuterung unter Verwendung der Spannungsdifferenz umfasst.

Für die Bestimmung der Magnetisierungsparameter des Dreiphasen-Elektromotors wird die Spannung bzw. die Spannungsdifferenz am Anschluss der dritten Phase 212.3, welcher den Abgriff eines induktiven Spannungsteilers darstellt, über einen Messzeitraum hinweg gemessen. Dabei erfolgt eine Mehrzahl von Messungen, die in regelmäßigen oder unregelmäßigen Zeitabständen während des Messzeitraums durchgeführt werden. Während des Messzeitraums wird auch der Rotor gleichmäßig um zumindest einen Teil einer elektrischen Umdrehung relativ zum Stator gedreht. Dabei erfolgt das Messen der Spannung während des Messzeitraums derart, dass die Spannung am induktiven Spannungsteiler zumindest dann gemessen wird, wenn der Rotor jeweils einen von mehreren vorbestimmten Drehwinkeln relativ zum Stator einnimmt.

Die Drehung erfolgt dabei um zumindest solch einen Abschnitt einer vollen elektrischen Umdrehung, dass in dem abgedeckten Drehwinkelbereich zumindest ein Maximum und zumindest ein Minimum der gemessenen Spannungswerte $U_3$ am induktiven Spannungsteiler gemessen wird. Optional können die Messungen in sehr viel kleineren Zeitabständen bzw. Drehwinkelabständen durchgeführt werden, sodass sich optional ein Verlauf der Spannung $U_3$ in Abhängigkeit des Drehwinkels rekonstruieren lässt, wenngleich dies nicht zwingend erforderlich ist.

Für die Bestimmung des Magnetisierungsparameters $k_1$ wird eine Messung der Spannung $U_3$ am induktiven Spannungsteiler in Abhängigkeit vom Drehwinkel bei unbestromtem Motor durchgeführt, d.h. wenn abgesehen von den Spannungspulsen zur Erzeugung der Strompulse für die Bestimmung der Magnetisierungsparameter der Motor nicht bestromt wird. Für die Bestimmung des Magnetisierungsparameters $k_2$ wird eine entsprechende Messung bei bestromtem Motor 210 durchgeführt wird, wobei zusätzlich zu den Strompulsen auch eine kommutierte Bestromung des Motors 210 erfolgt, wobei die Kommutierung während des Messzeitraums unverändert beibehalten wird und nicht an den geänderten Drehwinkel angepasst wird. Beide Messungen können mehrmals durchgeführt werden, insbesondere abwechselnd, um etwa im Rahmen eines iterativen Vorgangs beide Magnetisierungsparameter zu bestimmen.

Es folgt nun zunächst eine Erläuterung der Bestimmung des Magnetisierungsparameters $k_1$. Dazu werden von einer Ansteuerung des Elektromotors 210 periodisch wiederholt über einen Messzeitraum Strompulse in die erste und zweite Phase 212.1 bzw. 212.2 eingespeist, während der Rotor über den Messzeitraum entweder langsam und gleichmäßig relativ zum Stator gedreht wird oder jeweils zwischen aufeinanderfolgenden Messungen stückweise weitergedreht wird. Die Drehung kann manuell durch einen Anwender oder automatisiert erfolgen. Außerdem werden zeitgleich mit der Einspeisung der Strompulse die Spannungswerte der Spannung $U_3$ am induktiven Spannungsteiler gemessen und die Messwerte abgespeichert. Dabei kann es ausreichend sein, wenn lediglich die Spannungswerte der Spannung $U_3$ bei jenen Drehwinkeln abgespeichert werden, bei denen die Spannung $U_3$ ein lokales Minimum oder Maximum aufweist, welche sodann den jeweiligen Winkelwerten zugeordnet werden. Alternativ kann eine engmaschigere Erfassung der Spannungswerte erfolgen, sodass der Verlauf der Spannung $U_3$ über den Drehwinkelbereich erkennbar ist und/oder rekonstruiert werden kann.

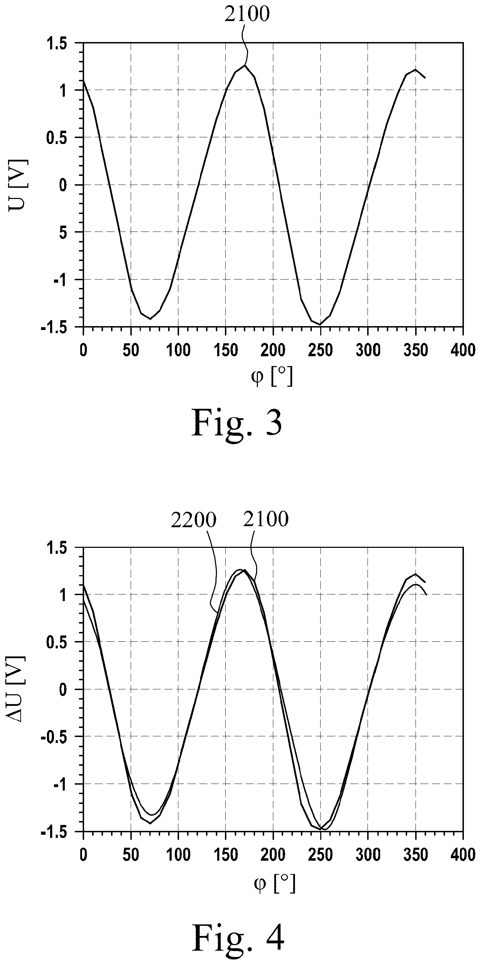

Figur 3 zeigt in Graph 2100 beispielhaft den gemessenen Verlauf der Spannung $U_3$ am induktiven Spannungsteiler, d.h. am Anschluss der dritten Phase 212.3, über den Verlauf des Drehwinkels $\varphi$ bei unbestromtem Motor, d.h. wenn zur Bestimmung des Magnetisierungsparameters $k_1$ abgesehen von den Spannungspulsen zur Erzeugung der Strompulse für die Bestimmung der Magnetisierungsparameter der Motor nicht bestromt wird. Dabei ist auf der horizontalen Achse der Drehwinkel des Rotors relativ zum Stator in Grad von 0° bis 360° aufgetragen und auf der vertikalen Achse die gemessene Spannungsdifferenz zwischen den gemessenen Spannungswerten bei Messpulsen mit unterschiedlicher Polarität in Volt aufgetragen. Der Graph 2100 verdeutlicht, dass die gemessene Spannung $U_3$ bzw. Spannungsdifferenz einen sinusförmigen Verlauf mit einer Periodizität von etwa 180° und einer Amplitude von ca. 1,3 V aufweist, wobei die Sinuskurve um die Null-Linie oszilliert.

Ferner umfasst das Verfahren ein Berechnen von entsprechenden Simulationswerten der Spannung am Spannungsteiler bei den vorbestimmten Drehwinkeln unter Verwendung vorbestimmter Schätzwerte für die Magnetisierungsparameter und ein Anpassen der vorbestimmten Schätzwerte für die Magnetisierungsparameter derart, dass eine Abweichung der Simulationswerte der Spannung von den Messwerten der gemessenen Spannung $U_3$ minimiert wird. Die Simulationswerte werden dabei anhand eines vorgegebenen mathematischen Modells berechnet. Ein beispielhaftes mathematisches Modell wird im Folgenden erläutert.

Das mathematische Modell ist für den bereits oben erwähnten Beispielfall geschildert, in dem die erste und zweite Phase 212.1 und 212.2 mit Strompulsen versehen werden, während an der dritten, unbestromten Phase 212.3 die Spannung $U_3$ bzw. Spannungsdifferenz gemessen wird. Das mathematische Modell basiert auf dem folgenden Differenzialgleichungssystem.

$$(10) \qquad \frac{di_{L2}}{dt} - \frac{U_S - i_{L2}(R_1 + R_2)}{L_1 + L_2}$$

$$(11) \qquad U_3(t) = i_{L2} \cdot R_2 + L_2 \cdot \frac{di_{L2}}{dt}$$

wobei

$$(12) \qquad L_1 = L_{max} \cdot \{1 - k_1[1 + \cos(2\varphi)] + k_2 i_{L1}[\cos(\varphi) + \cos(2\varphi)]\}$$

$$(13) \qquad L_2 = L_{max} \cdot \{1 - k_1[1 + \cos(2(\varphi - 120°))] + k_2 i_{L2}[\cos(\varphi - 120°) + \cos(2(\varphi - 120°))]\}$$

$$(14) \qquad i_{L1} = -i_{L2}$$

Dabei indizieren $L_1$ und $L_2$ die Induktivität der ersten bzw. zweiten Phase 212.1 bzw. 212.2 des Dreiphasen-Elektromotors, $U_S$ die Versorgungsspannung, $R_1$ und $R_2$ den ohmschen Widerstand der ersten bzw. zweiten Phase 212.1 bzw. 212.2, t die Zeit und $U_3$ die am Anschluss der dritten Phase 212.3 gemessene Spannung bzw. Spannungsdifferenz. Die maximale Induktivität $L_{max}$ wird für alle Phasen des Elektromotors als gleich angenommen und kann beispielsweise mittels einer Induktivitätsmessung für eine einzelne Phase bestimmt werden. Sofern dies aufgrund eines räumlichen Überlapps von zwei der Phasen nicht ohne weiteres möglich sein sollte, können auch die maximalen Induktivitäten von zwei Phasen 212.1 und 212.2 zusammen gemessen werden und der Wert $L_{max}$ einer einzelnen Induktivität durch ein entsprechendes Herunterskalieren bestimmt werden. Der Drehwinkel $\varphi$ ist dabei der Drehwinkel des Rotors relativ zum Stator. Parameter $k_1$ entspricht dem stromunabhängigen Magnetisierungsparameter, der die Induktivitätsvariation bedingt durch die Rotormagnete charakterisiert, und $k_2$ entspricht dem stromabhängigen Magnetisierungsparameter, der die Induktivitätsvariation durch die Bestromung der jeweiligen Phase charakterisiert.

Mittels der oben dargestellten Gleichungen (10) bis (14) können sodann Simulationswerte für die Spannung $U_3$ berechnet werden, welche den zu erwartenden gemessenen Spannungswerten bei den vorbestimmten Drehwinkeln des Rotors während des Messzeitraums entsprechen. Die Spannungswerte werden also insbesondere für jene Drehwinkel berechnet, bei denen auch die Spannung $U_3$ gemessen wurde. Diese berechneten Spannungswerte können sodann mit den Werten der gemessenen Spannung verglichen werden. Darauf basierend kann sodann der Magnetisierungsparameter $k_1$ variiert und in einem Regressionsverfahren optimiert werden und der Einfluss auf die berechneten Simulationswerte überprüft werden. Für die initiale Simulation und Optimierung von $k_1$ bei unbestromtem Motor kann zunächst ein vorgegebener Wert von $k_2$ angenommen werden. Sofern $k_2$ bereits in einer vorherigen Messung ermittelt und/oder optimiert wurde, kann optional dieser Wert verwendet werden. Alternativ kann beispielsweise die Simulation bzw. Optimierung zunächst mit $k_2 = 0$ begonnen und/oder durchgeführt werden.

Auf diese Weise kann eine Optimierung des Magnetisierungsparameters $k_1$ durchgeführt werden, welche das Ziel hat, eine Abweichung der berechneten Simulationswerte der Spannung von den entsprechenden gemessenen Spannungswerten zu minimieren. Der auf diese Weise simulativ ermittelte Wert des Magnetisierungsparameters $k_1$, für welchen die Abweichung am geringsten ist, kann sodann als der tatsächliche Magnetisierungsparameter $k_1$ dem vermessenen Dreiphasen-Elektromotor zugeordnet werden und/oder für eine Bestimmung des Parameters $k_2$ verwendet werden.

Figur 4 zeigt beispielhaft den gemessenen Verlauf der Spannung $U_3$ am induktiven Spannungsteiler aus Figur 3 (Graph 2100) im Vergleich zum simulierten und hinsichtlich des Magnetisierungsparameters $k_1$ optimierten Verlauf der Spannung $U_3$ über den Drehwinkel $\varphi$ (Graph 2200). Dabei ist erkennbar, dass die Graphen 2100 und 2200 nur eine geringe Abweichung aufweisen und demnach mittels der Variation von $k_1$ eine sehr genaue Anpassung der Simulation an die Messwerte erzielbar ist.

Entsprechende Verfahrensschritte können sodann für die Bestimmung des Magnetisierungsparameters $k_2$ durchgeführt werden, wobei abweichend vom oben dargestellten Verfahren für die Bestimmung des Magnetisierungsparameters $k_1$ die Verfahrensschritte bei bestromtem Motor durchgeführt werden. Dabei wird der Motor mit einem definierten vorgegebenen Strom mit vorgegebener und unverändert beibehaltener Kommutierung bestromt.

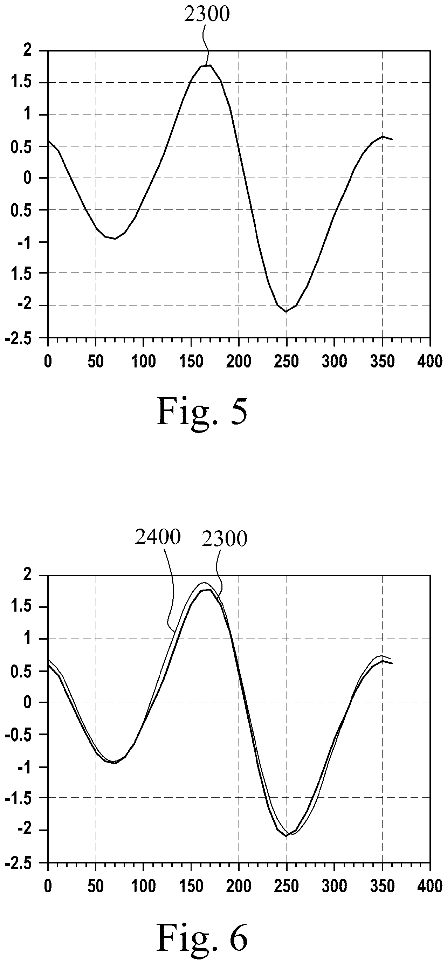

Figur 5 zeigt in Graph 2300 den gemessenen Verlauf der Spannung $U_3$ (vertikale Achse, in Volt) am induktiven Spannungsteiler in Abhängigkeit vom Drehwinkel $\varphi$ (in Grad). Graph 2300 entspricht dabei dem Verlauf der Spannung $U_3$, welche mittels periodisch wiederholt eingespeisten Strompulsen in die erste und zweite Phase 212.1 und 212.2 verursacht wird, während über den Messzeitraum der Rotor langsam und gleichmäßig relativ zum Stator gedreht wird. Die gemessenen Spannungswerte $U_3$ werden sodann in einem Speicher abgespeichert, wobei der Speicher zur Ansteuerung des Elektromotors gehörend oder separat von dieser ausgebildet sein kann. Auch in Graph 2300 ist zu beobachten, dass die Spannung $U_3$ über eine elektrische Umdrehung lokale Minima und Maxima aufweist, welche für die Bestimmung des Magnetisierungsparameters $k_2$ herangezogen werden können.

Auch bei der Bestimmung des Magnetisierungsparameters $k_2$ erfolgt ein Berechnen und Optimieren von entsprechenden Simulationswerten und ein Vergleich mit den gemessenen Werten, welcher in Figur 6 dargestellt ist, wobei die Optimierung mittels einer Variation des Magnetisierungsparamters $k_2$ erfolgt. Dabei entspricht der Graph 2300 dem bereits in Figur 5 gezeigten Graphen der gemessenen Spannung und Graph 2400 dem simulierten und optimierten Verlauf der Spannung $U_3$. Bei der Optimierung des Magnetisierungsparameters $k_2$ kann ein vorbestimmter Wert für $k_1$ angenommen werden. Sofern bereits in einer vorherigen Messung der Magnetisierungsparameter $k_1$ bestimmt und/oder optimiert wurde, kann optional auch dieser Wert bei der Bestimmung des Magnetisierungsparameters $k_2$ verwendet werden. Durch eine mehrfache iterative Optimierung der Magnetisierungsparameter $k_1$ und $k_2$, wobei in jedem Iterationsschritt die Ergebnisse des vorherigen Iterationsschritts verwendet werden, kann die Genauigkeit der Bestimmung der Magnetisierungsparameter $k_1$ und $k_2$ verbessert werden. Wie in Figur 6 zu erkennen ist, kann auch für die Bestimmung des Magnetisierungsparameters $k_2$ eine sehr gute Übereinstimmung der simulierten mit den gemessenen Spannungswerten $U_3$ erzielt werden. Die ersten Initialwerte können beispielsweise zu $k_1 = k_2 = 0$ gewählt werden und nach jedem durchgeführten Iterationsschritt kann sodann für den jeweils anderen Parameter der zuletzt bestimmte optimierte Wert genutzt.

**Bezugszeichenliste**

| | |
|---|---|
| 210 | Dreiphasen-Elektromotor |
| 212 | Phase des Dreiphasen-Elektromotors |
| 212.1, 212.2, 212.3 | erste, zweite bzw. dritte Phase des Dreiphasen-Elektromotors |
| 214 | Sternpunkt |
| $U_1$, $U_2$, $U_3$ | Spannung am Anschluss der ersten, zweiten bzw. dritten Phase |
| $L_1$, $L_2$, $L_3$ | Induktivität der ersten, zweiten bzw. dritten Phase |
| $R_1$, $R_2$, $R_3$ | ohmscher Widerstand der ersten, zweiten bzw. dritten Phase |
| $i_{L1}$, $i_{L2}$, $i_{L3}$ | Stromfluss in der ersten, zweiten bzw. dritten Phase |
| $U_S$ | Versorgungsspannung |
| | |
| 2100 | Graph der gemessenen Spannungsdifferenz in unbestromtem Fall |
| 2200 | Graph der simulierten Spannungsdifferenz in unbestromtem Fall |
| 2300 | Graph der gemessenen Spannungsdifferenz in bestromtem Fall |
| 2400 | Graph der simulierten Spannungsdifferenz in bestromtem Fall |

**Patentansprüche**

1. Verfahren zur Bestimmung von Magnetisierungsparametern eines Dreiphasen-Elektromotors (210) mit einem Rotor und einem Stator, das Verfahren umfassend und **gekennzeichnet durch**:

   - Einspeisen von Strompulsen in eine erste und zweite Phase (2212.1, 2212.2) des Dreiphasen-Elektromotors (210), wobei das Einspeisen der Strompulse über einen Messzeitraum erfolgt;
   - Drehen des Rotors um zumindest einen Teil einer elektrischen Umdrehung relativ zum Stator während des Messzeitraums, wobei das Drehen gleichmäßig über den gesamten Messzeitraum erfolgt;
   - Messen einer Spannung ($U_3$) an einem induktiven Spannungsteiler des Dreiphasen-Elektromotors (210) während des Messzeitraums und Ermitteln von Messwerten (2300) der gemessenen Spannung bei vorbestimmten Drehwinkeln (<p) des Rotors relativ zum Stator;
   - Berechnen von entsprechenden Simulationswerten (2400) der Spannung am Spannungsteiler bei den vorbestimmten Drehwinkeln (<p) unter Verwendung vorbestimmter Schätzwerte für die Magnetisierungsparameter und Anpassen der vorbestimmten Schätzwerte für die Magnetisierungsparameter derart, dass eine Abweichung der Simulationswerte (2400) der Spannung von der Messwerten (2300) der gemessenen Spannung ($U_3$) minimiert wird
   - Bestimmen zumindest eines oder mehrerer der Magnetisierungsparameter des Dreiphasen-Motors (210) anhand der für die Minimierung der Abweichung der Simulationswerte von den Messwerten der gemessenen Spannung ($U_3$) angepassten Schätzwerte der Magnetisierungsparameter.

2. Verfahren gemäß Anspruch 1, wobei das Messen einer Spannung ($U_3$) am induktiven Spannungsteiler ein Messen einer Spannungsdifferenz zwischen einem ersten und einem zweiten Spannungswert umfasst, wobei der erste Spannungswert durch das Einspeisen eines Strompulses mittels eines Spannungspulses einer ersten Polarität und der zweite Spannungswert durch das Einspeisen eines Strompulses mittels eines Spannungspulses einer der ersten Polarität entgegengesetzten zweiten Polarität erzeugt wird.

3. Verfahren gemäß Anspruch 1 oder 2, wobei die Strompulse als Testpulse ausgebildet sind und das Verfahren zumindest einmal bei abgesehen von den Testpulsen unbestromtem Dreiphasen-Elektromotor (210) durchgeführt wird, und wobei das Bestimmen des einen oder der mehreren Magnetisierungsparameter ein Bestimmen eines Magnetisierungsparameters $k_1$ umfasst, der eine Induktivitätsvariation durch einen oder mehrere Rotormagnete des Dreiphasen-Elektromotors (210) charakterisiert.

4. Verfahren gemäß Anspruch 3, wobei das Verfahren zumindest einmal bei zusätzlich zu den Testpulsen bestromtem Dreiphasen-Elektromotor (210) durchgeführt wird und wobei das Bestimmen des einen oder der mehreren Magnetisierungsparameter ein Bestimmen eines Magnetisierungsparameters $k_2$ umfasst, der eine Induktivitätsvariation durch eine Bestromung des Dreiphasen-Elektromotors (210) charakterisiert.

5. Verfahren gemäß Anspruch 4, wobei das Bestromen des Dreiphasen-Elektromotors (210) derart erfolgt, dass eine Kommutierung der Bestromung über den Messzeitraum unverändert beibehalten wird.

6. Verfahren gemäß einem der Ansprüche 1 bis 5, wobei das Verfahren zumindest einmal bei bestromtem Dreiphasen-Elektromotor (210) durchgeführt wird und dabei die Strompulse als Blockkommutierungspulse ausgebildet sind.

7. Verfahren gemäß einem der Ansprüche 1 bis 6, wobei das Verfahren zumindest einmal bei unbestromtem und zumindest einmal bei bestromtem Dreiphasen-Elektromotor (210) durchgeführt wird.

8. Verfahren gemäß einem der Ansprüche 1 bis 7, wobei das Verfahren abwechselnd bei unbestromtem und bestromtem Dreiphasen-Elektromotor (210) iterativ durchgeführt wird, wobei zumindest ein Teil der bei einer Durchführung des Verfahrens bestimmten Magnetisierungsparameter bei der darauffolgenden iterativen Durchführung des Verfahrens als vorbestimmte Schätzwerte für die Magnetisierungsparameter verwendet werden.

9. Verfahren gemäß einem der Ansprüche 135 bis 8, wobei derartige Drehwinkel (<p) als die vorbestimmten Drehwinkel (<p) vorbestimmt sind, bei denen die jeweils gemessene Spannung ein lokales Maximum und/oder ein lokales Minimum aufweist.

10. Verfahren gemäß Anspruch 9, wobei der zumindest eine Teil der elektrischen Umdrehung, um den der Rotor relativ zum Stator gedreht wird, zumindest 90° aufweist und zumindest einen vorbestimmten Drehwinkel (<p) aufweist, bei dem die gemessene Spannung ($U_3$) ein lokales Minimum aufweist und zumindest einen weiteren vorbestimmten Drehwinkel (<p) aufweist, bei dem die gemessene Spannung ($U_3$) ein lokales Minimum aufweist lokales Maximum aufweist.

**11.** Verfahren gemäß einem der Ansprüche 1 bis 10, wobei die vorbestimmten Drehwinkel derart vorbestimmt sind, dass anhand der gemessenen Spannung bei den vorbestimmten Drehwinkeln ein kontinuierlicher Verlauf der Spannung über die elektrische Umdrehung bestimmbar ist.

**12.** Verfahren gemäß einem der Ansprüche 1 bis 11, wobei die vorbestimmten Schätzwerte für die Magnetisierungsparameter über ein vorbestimmtes mathematisches Modell für die jeweilige Induktivität der ersten und zweiten Phase des Dreiphasen-Elektromotors in die Berechnung der Simulationswerte einfließen.

**13.** Verfahren gemäß einem der Ansprüche 1 bis 12, ferner umfassend ein Vorpositionieren des Rotors relativ zum Stator vor dem Einspeisen der Strompulse auf einen vorbestimmten Start-Drehwinkel.

**14.** Verfahren gemäß Anspruch 13, wobei das Vorpositionieren mittels einer mechanischen Zwangspositionierung und/oder durch ein Einprägen von Strom in den Dreiphasen-Elektromotor bis zur Erreichung des Start-Drehwinkels erfolgt.

**15.** Vorrichtung zur Bestimmung von Magnetisierungsparametern eines Dreiphasen-Elektromotors (210) mit einem Rotor und einem Stator, die Vorrichtung umfassend und **gekennzeichnet durch**:

- Eine Ansteuereinheit zur Bestromung des Dreiphasen-Elektromotors (210) und zur Einspeisung von Strompulsen in eine erste und zweite Phase (2212.1, 2212.2) des Dreiphasen-Elektromotors über einen Messzeitraum;
- Eine Dreheinheit zum Drehen des Rotors relativ zum Stator, wobei die Vorrichtung dazu eingerichtet ist, den Rotor relativ zum Stator mittels der Dreheinheit während des gesamten Messzeitraums gleichmäßig um eine elektrische Umdrehung zu drehen;
- Ein Messelement zum Messen einer Spannung an einem induktiven Spannungsteiler des Dreiphasen-Elektromotors während des Messzeitraums; und
- eine Steuereinheit, welche dazu eingerichtet ist:

+Messwerte (2300) der mittels des Messelements gemessenen Spannung ($U_3$) be vorbestimmten Drehwinkeln des Rotors relativ zum Stator zu ermitteln;
+Simulationswerte (2400) der Spannung am Spannungsteiler bei der vorbestimmten Drehwinkeln unter Verwendung vorbestimmter Schätzwerte für die Magnetisierungsparameter zu berechnen und die vorbestimmten Schätzwerte für die Magnetisierungsparameter derart anzupassen, dass eine Abweichung der Simulationswerte (2400) der Spannung von den Messwerten (2300) der gemessenen Spannung minimiert wird
+einen oder mehrere der Magnetisierungsparameter des Dreiphasen-Motors anhand der für die Minimierung der Abweichung der Simulationswerte von den Messwerten der gemessenen Spannung angepassten Schätzwerte der Magnetisierungsparameter zu bestimmen.

**Claims**

**1.** Method for determining magnetization parameters of a three-phase electric motor (210) having a rotor and a stator, the method comprising and being **characterized by**:

- feeding current pulses into a first and second phase (2212.1, 2212.2) of the three-phase electric motor (210), wherein the feeding-in of the current pulses takes place over a measurement period;
- rotating the rotor by at least one part of an electrical revolution relative to the stator during the measurement period, wherein the rotation takes place evenly over the total measurement period;
- measuring a voltage ($U_3$) across an inductive voltage divider of the three-phase electric motor (210) during the measurement period and ascertaining measured values (2300) of the measured voltage at predetermined angles of rotation ($\varphi$) of the rotor relative to the stator;
- calculating corresponding simulation values (2400) of the voltage across the voltage divider at the predetermined angles of rotation ($\varphi$) by using predetermined estimated values for the magnetization parameters and adjusting the predetermined estimated values for the magnetization parameters in such a way that a deviation of the simulation values (2400) of the voltage from the measured values (2300) of the measured voltage ($U_3$) is minimized;
- determining at least one or more of the magnetization parameters of the three-phase motor (210) with the aid of the estimated values of the magnetization parameters which were adjusted for the minimizing of the deviation of the simulation values from the measured values of the measured voltage ($U_3$).

2. Method according to Claim 1, wherein the measurement of a voltage ($U_3$) across the inductive voltage divider comprises a measurement of a voltage difference between a first and a second voltage value, wherein the first voltage value is produced by the feeding-in of a current pulse by means of a voltage pulse of a first polarity and the second voltage value is produced by the feeding-in of a current pulse by means of a voltage pulse of a second polarity opposite to the first polarity.

3. Method according to Claim 1 or 2, wherein the current pulses are formed as test pulses and the method is performed at least once while the three-phase electric motor (210) is unenergized except for the test pulses, and wherein the determination of the one or more magnetization parameters comprises determining a magnetization parameter $k_1$ which characterizes an inductance variation by one or more rotor magnets of the three-phase electric motor (210).

4. Method according to Claim 3, wherein the method is performed at least once while the three-phase electric motor (210) is energized in addition to the test pulses and wherein the determination of the one or more magnetization parameters comprises determining a magnetization parameter $k_2$ which characterizes an inductance variation by energization of the three-phase electric motor (210).

5. Method according to Claim 4, wherein the energization of the three-phase electric motor (210) takes place in such a way that commutation of the energization is maintained unaltered over the measurement period.

6. Method according to one of Claims 1 to 5, wherein the method is performed at least once while the three-phase electric motor (210) is energized and the current pulses are formed as block commutation pulses.

7. Method according to one of Claims 1 to 6, wherein the method is performed at least once while the three-phase electric motor (210) is unenergized and at least once while the three-phase electric motor (210) is energized.

8. Method according to one of Claims 1 to 7, wherein the method is performed iteratively while the three-phase electric motor (210) alternately is unenergized and energized, wherein at least some of the magnetization parameters determined while the method was being performed are used as predetermined estimated values for the magnetization parameters in the subsequent iterative performance of the method.

9. Method according to one of Claims 135 to 8, wherein such angles of rotation ($\varphi$) are predetermined as the predetermined angles of rotation ($\varphi$) at which the respective measured voltage has a local maximum and/or a local minimum.

10. Method according to Claim 9, wherein the at least one part of the electrical revolution by which the rotor is rotated relative to the stator has at least 90° and has at least one predetermined angle of rotation ($\varphi$) at which the measured voltage ($U_3$) has a local minimum and has at least one further predetermined angle of rotation ($\varphi$) at which the measured voltage ($U_3$) has a local minimum has local maximum.

11. Method according to one of Claims 1 to 10, wherein the predetermined angles of rotation are predetermined in such a way that a continuous profile of the voltage over the electrical revolution can be determined with the aid of the measured voltage at the predetermined angles of rotation.

12. Method according to one of Claims 1 to 11, wherein the predetermined estimated values for the magnetization parameters are included in the calculation of the simulation values via a predetermined mathematical model for the respective inductance of the first and second phase of the three-phase electric motor.

13. Method according to one of Claims 1 to 12, further comprising a prepositioning of the rotor relative to the stator at a predetermined starting angle of rotation before the current pulses are fed in.

14. Method according to Claim 13, wherein the prepositioning takes place by means of a mechanical forced positioning and/or by injecting current into the three-phase electric motor until the starting angle of rotation is reached.

**15.** Device for determining magnetization parameters of a three-phase electric motor (210) having a rotor and a stator, the device comprising and being **characterized by**:

- an activation unit for energizing the three-phase electric motor (210) and for feeding current pulses into a first and second phase (2212.1, 2212.2) of the three-phase electric motor over a measurement period;
- a rotary unit for rotating the rotor relative to the stator, wherein the device is designed to rotate the rotor relative to the stator, by means of the rotary unit, evenly by one electrical revolution during the total measurement period;
- a measurement element for measuring a voltage across an inductive voltage divider of the three-phase electric motor during the measurement period; and
- a control unit which is designed to:

+ascertain measured values (2300) of the voltage ($U_3$), which is measured by means of the measurement element, at predetermined angles of rotation of the rotor relative to the stator;
+calculate simulation values (2400) of the voltage across the voltage divider at the predetermined angles of rotation by using predetermined estimated values for the magnetization parameters and to adjust the predetermined estimated values for the magnetization parameters in such a way that a deviation of the simulation values (2400) of the voltage from the measured values (2300) of the measured voltage is minimized;
+determine one or more of the magnetization parameters of the three-phase motor with the aid of the estimated values of the magnetization parameters which were adjusted for the minimizing of the deviation of the simulation values from the measured values of the measured voltage.

**Revendications**

**1.** Procédé de détermination de paramètres de magnétisation d'un moteur électrique triphasé (210) pourvu d'un rotor et d'un stator, le procédé comprenant et étant **caractérisé par** :

- injecter des impulsions de courant dans une première et une deuxième phase (2212.1, 2212.2) du moteur électrique triphasé (210), l'injection des impulsions de courant étant effectuée sur une période de mesure ;
- faire tourner le rotor d'au moins une partie d'un tour électrique par rapport au stator pendant la période de mesure, la rotation étant effectuée uniformément sur toute la période de mesure ;
- mesurer une tension ($U_3$) aux bornes d'un diviseur de tension inductif du moteur électrique triphasé (210) pendant la période de mesure et déterminer des valeurs de mesure (2300) de la tension mesurée à des angles de rotation prédéterminés ($\varphi$) du rotor par rapport au stator ;
- calculer des valeurs de simulation correspondantes (2400) de la tension aux bornes du diviseur de tension pour les angles de rotation prédéterminés ($\varphi$) à l'aide de valeurs estimées prédéterminées pour les paramètres de magnétisation et adapter les valeurs estimées prédéterminées pour les paramètres de magnétisation de manière à minimiser un écart des valeurs de simulation (2400) de la tension par rapport aux valeurs de mesure (2300) de la tension mesurée ($U_3$),
- déterminer au moins un ou plusieurs des paramètres de magnétisation du moteur triphasé (210) sur la base des valeurs estimées des paramètres de magnétisation adaptées pour minimiser l'écart des valeurs de simulation par rapport aux valeurs de mesure de la tension mesurée ($U_3$).

**2.** Procédé selon la revendication 1, la mesure d'une tension ($U_3$) aux bornes du diviseur de tension inductif comprenant la mesure d'une différence de tension entre une première et une deuxième valeur de tension, la première valeur de tension étant générée par l'injection d'une impulsion de courant à l'aide d'une impulsion de tension d'une première polarité et la deuxième valeur de tension étant générée par l'injection d'une impulsion de courant à l'aide d'une impulsion de tension d'une deuxième polarité opposée à la première polarité.

**3.** Procédé selon la revendication 1 ou 2, l'impulsion de courant étant conçue comme une impulsion de test et le procédé étant mis en oeuvre au moins une fois lorsque le moteur électrique triphasé (210) n'est pas alimenté en dehors des impulsions de test, et la détermination des un ou plusieurs paramètres de magnétisation comprenant la détermination d'un paramètre de magnétisation $k_1$ qui caractérise une variation d'inductance à travers un ou plusieurs aimants de rotor du moteur électrique triphasé (210).

**4.** Procédé selon la revendication 3, le procédé étant mis en oeuvre au moins une fois lorsque le moteur électrique triphasé (210) est alimenté en plus des impulsions de test et la détermination des un ou plusieurs paramètres de magnétisation comprenant la détermination d'un paramètre de magnétisation $k_2$ qui caractérise une variation d'inductance par alimentation du moteur électrique triphasé (210).

5. Procédé selon la revendication 4, l'alimentation du moteur électrique triphasé (210) étant effectuée de manière à ce que la commutation de l'alimentation soit maintenue inchangée pendant la période de mesure.

6. Procédé selon l'une des revendications 1 à 5, le procédé étant mis en oeuvre au moins une fois lorsque le moteur électrique triphasé (210) est alimenté et les impulsions de courant étant conçues comme des impulsions de commutation de bloc.

7. Procédé selon l'une des revendications 1 à 6, le procédé étant mis en oeuvre au moins une fois lorsque le moteur électrique triphasé (210) n'est pas alimenté et au moins une fois lorsqu'il est alimenté.

8. Procédé selon l'une des revendications 1 à 7, le procédé étant mis en oeuvre de manière itérative alternativement lorsque le moteur électrique triphasé (210) n'est pas alimenté et lorsqu'il est alimenté, au moins une partie des paramètres de magnétisation déterminés lors de la mise en oeuvre du procédé étant utilisée comme valeurs estimées prédéterminées pour les paramètres de magnétisation lors de la mise en oeuvre itérative ultérieure du procédé.

9. Procédé selon l'une des revendications 1, 3, 5 à 8, les angles de rotation ($\varphi$) étant prédéterminés comme étant les angles de rotation prédéterminés ($\varphi$) auxquels la tension mesurée respective présente un maximum local et/ou un minimum local.

10. Procédé selon la revendication 9, au moins une partie du tour électrique sur laquelle le rotor tourne par rapport au stator présentant au moins 90° et présentant au moins un angle de rotation prédéterminé ($\varphi$) pour lequel la tension mesurée ($U_3$) présente un minimum local et au moins un autre angle de rotation prédéterminé ($\varphi$) pour lequel la tension mesurée ($U_3$) présente un minimum local et un maximum local.

11. Procédé selon l'une des revendications 1 à 10, les angles de rotation prédéterminés étant prédéterminés de manière à ce qu'une variation continue de la tension sur le tour électrique peut être déterminée sur la base de la tension mesurée pour les angles de rotation prédéterminés.

12. Procédé selon l'une des revendications 1 à 11, les valeurs estimées prédéterminées pour les paramètres de magnétisation étant incorporées dans le calcul des valeurs de simulation par le biais d'un modèle mathématique prédéterminé pour l'inductance respective des première et deuxième phases du moteur électrique triphasé.

13. Procédé selon l'une des revendications 1 à 12, comprenant en outre le prépositionnement du rotor par rapport au stator avant d'injecter les impulsions de courant à un angle de rotation de départ prédéterminé.

14. Procédé selon la revendication 13, le prépositionnement étant effectué au moyen d'un positionnement forcé mécanique et/ou par injection de courant dans le moteur électrique triphasé jusqu'à ce que l'angle de rotation de départ soit atteint.

15. Dispositif de détermination de paramètres de magnétisation d'un moteur électrique triphasé (210) pourvu d'un rotor et d'un stator, le dispositif comprenant et étant **caractérisé par** :

    - une unité d'excitation destinée à alimenter le moteur électrique triphasé (210) et à injecter des impulsions de courant dans une première et une deuxième phase (2212.1, 2212.2) du moteur électrique triphasé sur une période de mesure ;
    - une unité de mise en rotation destinée à faire tourner le rotor par rapport au stator, le dispositif étant conçu pour faire tourner le rotor par rapport au stator uniformément d'un tour électrique pendant toute la période de mesure au moyen de l'unité de mise en rotation ;
    - un élément de mesure destiné à mesurer une tension aux bornes d'un diviseur de tension inductif du moteur électrique triphasé pendant la période de mesure ; et
    - une unité de commande qui est conçue pour :

        + déterminer des valeurs de mesure (2300) de la tension ($U_3$) mesurées au moyen de l'élément de mesure pour des angles de rotation prédéterminés du rotor par rapport au stator ;
        + calculer des valeurs de simulation (2400) de la tension aux bornes du diviseur de tension pour les angles de rotation prédéterminés à l'aide de valeurs estimées prédéterminées pour les paramètres de magnétisation et adapter les valeurs estimées prédéterminées pour les paramètres de magnétisation de manière à minimiser un écart entre les valeurs de simulation (2400) de la tension et les valeurs de mesure (2300) de la tension mesurée,

+ déterminer un ou plusieurs des paramètres de magnétisation du moteur triphasé sur la base des valeurs estimées des paramètres de magnétisation adaptées pour minimiser l'écart entre les valeurs de simulation et les valeurs mesurées de la tension mesurée.

Fig. 1A

Fig. 1B

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019127051 A1


**In der Beschreibung aufgeführte Nicht-Patentliteratur**

- Realistic Experience without Risk Using Virtual Electrical Machines Laboratory. **NARAYANAN GEETHA et al.** 2016 INTERNATIONAL CONFERENCE ON LEARNING AND TEACHING IN COMPUTING AND ENGINEERING (LATICE). IEEE, 31. Marz 2016, 132-133